# EUROPEAN PATENT APPLICATION

(11) **EP 3 719 816 A1**
(43) Date of publication of application: **07.10.2020**
(21) Application number: 20165920.8
(22) Date of filing: 26.03.2020
(51) Int. Cl.: H01B 7/06, H01B 7/04, H01B 7/00, H01B 7/08, H01M 2/20

(54) **ELECTRICAL CABLE, ARRANGEMENT COMPRISING AN ELECTRICAL CABLE AND METHOD FOR MANUFACTURING SUCH CABLE**

(30) Priority: 02.04.2019 DE 102019108582
(71) Applicant: TE Connectivity Germany GmbH, 64625 Bensheim (DE)
(72) Inventor: HAPP, Jonas Roland, 88250 Weingarten (DE); LISTING, Martin, 63225 Langen (DE); VU, Dinh Hung, 64686 Lautertal (DE); TOTH, Gerzson, 68307 Mannheim (DE)
(74) Representative: Patentanwaltskanzlei WILHELM & BECK

(57) **Abstract**

An electrical cable having a first section, having a second section and having a third section, wherein several electrical lines are guided from the first section to the third section via the second section, wherein each electrical line in the three sections is enveloped in each case by an insulating sheath, wherein, in the first section, the electrical lines are arranged side-by-side in a first plane, wherein, in the third section, the electrical lines are arranged side-by-side in a third plane, wherein, in the first section, the insulating sheaths of the lines are configured integrally in the form of a first insulating section, wherein, in the third section, the insulating sheaths of the lines are configured integrally in the form of a third insulating section, wherein, in the second section, the insulating sheaths of the electrical lines are divided at least into a first further insulating section and into a second further insulating section, wherein the first further insulating section and the second further insulating section are separated from each other by a gap, wherein the first further insulating section is guided from the first insulating section to the third insulating section in a first arcuate path, wherein the second further insulating section is guided from the first insulating section to the third insulating section in a second arcuate path.

## Description

The invention relates to an electrical cable, to an arrangement having an electrical cable and to a method for manufacturing the cable.

In the prior art, the connection of electrical contacts to electrical cables is known. For example, flat ribbon cables can be used to connect electrical contacts of a battery. The electrical cable is meant to permanently and reliably guarantee the electrical contact between the contact elements, even when there are temperature fluctuations.

The problem of the invention consists in providing an improved electrical cable and an improved arrangement having a first contact element, a second contact element and an electrical cable, which reliably and permanently enables a connection between the contact elements and the electrical cable.

The problem of the invention is solved by the electrical cable, by the arrangement having a first contact element, a second contact element and an electrical cable, and by the method for manufacturing an electrical cable in accordance with the independent claims.
An advantage of the proposed cable consists in the fact that the cable is configured to enable a mechanical and/or an electrical contact between the cable and two contact elements. In this case, the cable is suitable for compensating changes in the length of the cable and/or changes in the spacing between the contact elements. In addition, the cable has an increased flexibility in a direction arranged laterally in relation to the longitudinal extent of the cable. These advantages are achieved with the proposed electrical cable that has a first section, a second section and a third section. Electrical lines are guided from the first section to the third section via the second section, with the electrical lines each being embedded in an insulating sheath. A first further insulating section and a second further insulating section are configured in the second section. The first and the second further insulating section each have at least one electrical line with an insulating sheath.

The first and the second further insulating section are separated from each other and in particular are laterally spaced apart from each other. In the first section, the first and the second further insulating section are guided together to form an integral first insulating section. In addition, the first and the second further insulating section are guided together in the third section to form an integral third insulating section.

Between the first insulating section and the third insulating section, the first further insulating section is guided from the first insulating section to the third insulating section in a first arcuate path. In addition, the second further insulating section is guided from the first insulating section to the third insulating section in a second arcuate path.

The transitions between the first insulating section and the further first insulating section and between the further first insulating section and the third insulating section are designed in particular smoothly and uniformly without significant bends or kinks. The first path is likewise configured smoothly and uniformly without significant bends or kinks.

The transitions between the first insulating section and the further second insulating section and between the further second insulating section and the third insulating section are designed in particular smoothly and uniformly and without significant bends or kinks. The second path is likewise designed smoothly and uniformly without significant bends or kinks.

Depending on the selected embodiment, the first further insulating section can have at least one or more electrical lines which are electrically insulated from each other.

As a result of the division of the second section into a first further insulating section and into a second further insulating section, the electrical cable has an increased flexibility in the second section compared to a relative displacement of the first section with respect to the third section. Thus, changes in the spacings between the first section and the third section can be compensated with less opposing force. This is advantageous, in particular, when the first section and the third section are connected to a first and a second contact element, respectively.

In addition, as a result of the smooth and uniform transitions without kinks and without significant bends and as a result of the smooth and uniform first and second paths, the cable is subjected to less stress when the first and the third section undergo a relative displacement with respect to each other. Thus, a displacement of the two contact elements or also a change in the length of the electrical cable can be compensated with less stress on connecting sites between the first section and the first contact element and the third section and the second contact element. Furthermore, as a result of the configuration of the first further insulating section in the form of a first arcuate path and as a result of the configuration of the second further insulating section in the form of a second arcuate path between the first and the third section, a length of the electrical cable is kept ready in order to enable a change in position of the first section relative to the third section.

In addition, in the first section, additional or further lines can be configured either integrally in the first insulating section or as separately guided lines. In a similar way, additional electrical lines can be configured in the third insulating section too, which additional electrical lines are supplied either integrally in the third insulating section or as separate lines, which can be connected to the third insulating section in sections.

The first further insulating section can have a first curvature perpendicular to the first arcuate path. In addition, the second further insulating section too can have a second curvature perpendicular to the second arcuate path. The radius of curvature of the first curvature can be the same as or different from the radius of curvature of the second curvature. In addition, the radius can vary along the curvature both in the first further insulating section and in the second further insulating section.

The first and the second curvature are configured, for example, in the form of a complementary path of curvature transverse to the longitudinal extent of the second section. In this case, the first and the second further insulating section are adjacent to each other in a highest point of the common path of curvature. Lateral outer edge regions of the first and of the second further insulating section form end points of the path of curvature which are deeper and arranged closer to the plane of the first and of the second section.

The configuration of the first and/or of the second curvature of the first and/or of the second further insulating section increases the flexibility of the cable in relation to a lateral displacement of the first section with respect to the third section. Thus, with the proposed cable, not only are the flexibility and elasticity of the cable improved in relation to a longitudinal extent, but also in relation to a lateral displacement or twisting of the first section with respect to the third section.

In a simple design, the second section is subdivided into only two further insulating sections. The more further insulating sections laterally separated from each other that are supplied, the more flexible the cable is in relation to a change in length and in relation to a lateral change in the position of the first section with respect to the third section. As a result of the division into at least two or more further insulating sections in the second section, the cable is fanned out into several further insulating sections in the second section.

When the first and/or the second further insulating section is divided into a multiplicity of further insulating sections, the path of curvature or the first and/or second curvature is not formed by the individual further insulating sections, but rather by the multiplicity of further insulating sections. Thus, the further insulating sections can be arranged on a common path of curvature perpendicular to the longitudinal extent of the electrical lines in the second section. Depending on the selected embodiment, a further insulating section can have only one single electrical line with an insulating sheath or several electrical lines with a single insulating sheath.

In one design, the second section of the cable with the further insulating sections has the form of a spherical surface which is arcuate in three axes. In this case, the further insulating sections are arranged in the form of the spherical surface. In particular, the second section can have at least the form of a part-spherical surface or the form of a hemispherical surface. In this case, the further insulating sections are arranged in the form of a part-spherical surface or in the form of a hemispherical surface.

The electrical lines can have a rectangular or square cross-sectional area. In addition, the insulating sections with the electrical lines can have a rectangular cross-sectional area in cross-section and the form of a flat ribbon cable. Furthermore, the further insulating sections with the electrical lines can have a rectangular cross-sectional area in cross-section. Depending on the selected embodiment, the electrical lines can be arranged in different planes in the first insulating section, in the second section and/or in the third insulating section. Thus, it is not necessary for the electrical lines to be arranged side-by-side in exactly one plane in the first insulating section and in the third insulating section. The cable can be configured e.g. as a flat ribbon cable or as an FFC foil conductor.

In a further embodiment, the further insulating sections are formed in an elastically resilient manner in the first and in the second path, respectively, in such a way that, after an expansion or compression of the further insulating sections out of the first and/or the second arcuate path, the insulating sections are biased in the direction of the first and/or the second arcuate path. In this way, a defined form of the first and of the second further insulating sections with correspondingly set elastic and resilient properties is provided. In addition, the cable thus has specified elastically resilient expansion sections in the second section.

Depending on the selected embodiment, a cable can have a multiplicity of first, second, third sections etc. following each other. Thus, the cable can be used in order to be connected to a multiplicity of contact elements as flexibly and elastically as possible. In addition, the cable can be provided as an intermediate product, which is subdivided into corresponding shorter cables or cable sections, depending on the desired number of first, second and third sections.

The proposed cable is suitable, in particular, for an arrangement with at least one first contact element or with a first and a second contact element, with the first contact element or the first and second contact elements being mechanically and/or electrically connected to a first section of the cable and to a third section of the cable. The arrangement of a first and of a third section of a cable on a single contact element can be advantageous when the contact element is very large, for example, and attachment of the cable to two spaced-apart connection points of the contact element is desirable and, despite this, a relative change in position between the contact points of the first section and of the third section of the cable is to be compensated as elastically and resiliently as possible with small forces on the connection points.

The two contact elements can be arranged spaced apart from each other, with the two contact elements being arranged movably or displaceably with respect to each other within specified limits. The first insulating section is arranged at the first contact element, with an electrical line of the first insulating section being connected to the first contact element. The third insulating section is arranged at the second contact element, with an electrical line of the third insulating section being connected to the second contact element. The second section of the cable with the further insulating sections is arranged between the first and the third contact element.

The arrangement can comprise, for example, a first contact element of a first battery cell and a second contact element of a second battery cell. In one embodiment of the arrangement, the first contact element can represent a part of a first battery cell or can be connected to a part of a first battery cell. For example, the first contact element can represent an electrical pole of the first battery cell or can be connected to an electrical pole of the first battery cell. In a similar way, the second contact element can be connected to a second battery cell or can represent a part of a second battery cell. Battery cells also exhibit a change in size when there is a change in temperature. The size of the battery cell increases with temperature. If the battery cells abut each other, the electrical poles and also further electrical terminals, which are connected to the battery cells, are moved relative to each other when there are temperature fluctuations in the battery. In the case of a multiplicity of battery cells, this leads in particular to a change in the spacing between the electrical poles of the battery cells.

For direct electrical contacting of the electrical poles of the battery cells or for the mounting of thermal sensors on the battery cells, it is advantageous when the electrical cable used for this purpose allows a high degree of elastic flexibility. As a result, the connecting sites between the electrical cable and the contact elements or the battery cells are put under less stress. Thus, a multiplicity of thermally induced changes in the spacing between the contact elements of battery cells can be compensated permanently and safely with the aid of the proposed cable.

In one design, the first and/or the second insulating section have a recess, which is adjacent to an electrical line. In the region of the recess, the electrical line has a contact area, which is mechanically and/or electrically connected to the first or second contact element. For example, an electrical line can be connected in an electrically conductive manner to a contact element, in particular to a battery cell, via the recess. In addition, the electrical line can be connected to a sensor, for example a temperature sensor, via the recess. The temperature sensor, in turn, can be securely attached to the first or to the second contact element. Also in the case of the embodiment with the sensor, it is advantageous when the attachment of the sensor to the first or second contact element is stressed as little as possible by thermal or other changes in spacing between the first and the second contact element. As a result, the connecting forces between the sensor and the first or the second contact element can be configured small. Thus, the attachment between the sensor and the first or second contact element can be configured in a simplified manner. Furthermore, as a result, the connection between the sensor and the first or second contact element becomes more robust and has greater long-term stability.

The proposed arrangement can represent, for example, a first battery cell and a second battery cell of a battery, in particular of a drive battery of a vehicle. In particular in the automotive industry, a multiplicity of temperature fluctuations can occur, which can be from -30°C to +80°C, for example, over the service life of a battery. In addition, the battery cells can be displaced against each other over the course of time as a result of corresponding vibrations during operation of the vehicle. Thus, in particular in the automotive industry, a safe and reliable connection of the first and of the third section of the cable to a contact element, in particular to a battery cell, which is stable over the long term, is advantageous. Irrespective of use of the battery cells and in particular irrespective of use in the automotive industry, the proposed cable and the proposed arrangement can also be employed in other technical areas.

Furthermore, a method for manufacturing the electrical cable having the first section, the second section and the third section is proposed. Depending on the selected embodiment, the cable can be formed from a flat ribbon cable or an FFC foil conductor, for example, with at least one slot being introduced between two electrical lines in the second section. In the second section, all the electrical lines are preferably separated from each other by a slot in the insulating region and further insulating sections are configured. In addition, the second section of the cable can be configured in the desired form with the at least first and second path and the curvature of the second section transverse to the longitudinal extent of the electrical lines using an appropriate tool by way of pressure and/or temperature. In this case, on the one hand, the further insulating sections are formed along the longitudinal extent of the second section with the first, second or further arcuate path. In addition, the further insulating sections are configured in a direction transverse or perpendicular to the arcuate paths with a first, second or further curvature or path of curvature. Both the arcuate paths and the curvatures perpendicular to the arcuate paths are introduced permanently and in an elastically resilient manner into the second section of the cable.

The invention is explained in greater detail below with reference to the figures. In the figures
- Figure 1: shows a schematic plan view of a section of a cable,
- Figure 2: shows a schematic cross-section perpendicular to a longitudinal extent of the cable,
- Figure 3: shows a schematic side view of the longitudinal extent of the cable,
- Figure 4: shows a schematic partial cutout of a cross-section through the cable in the region of an aperture,
- Figure 5: shows a schematic plan view of a subsection of a further embodiment of a cable,
- Figure 6: shows a schematic cross-section through the cable of Figure 5,
- Figure 7: shows a schematic perspective depiction of the cable with a second section, in which the electrical lines are arranged perpendicular to the longitudinal extent of the cable on a path of curvature,
- Figure 8: shows a schematic plan view of an arrangement of battery cells with a cable,
- Figure 9: shows a cross-section through a connection point of the cable to a first contact element, and
- Figure 10: shows a cross-section through a subregion of the cable in the region of a sensor.

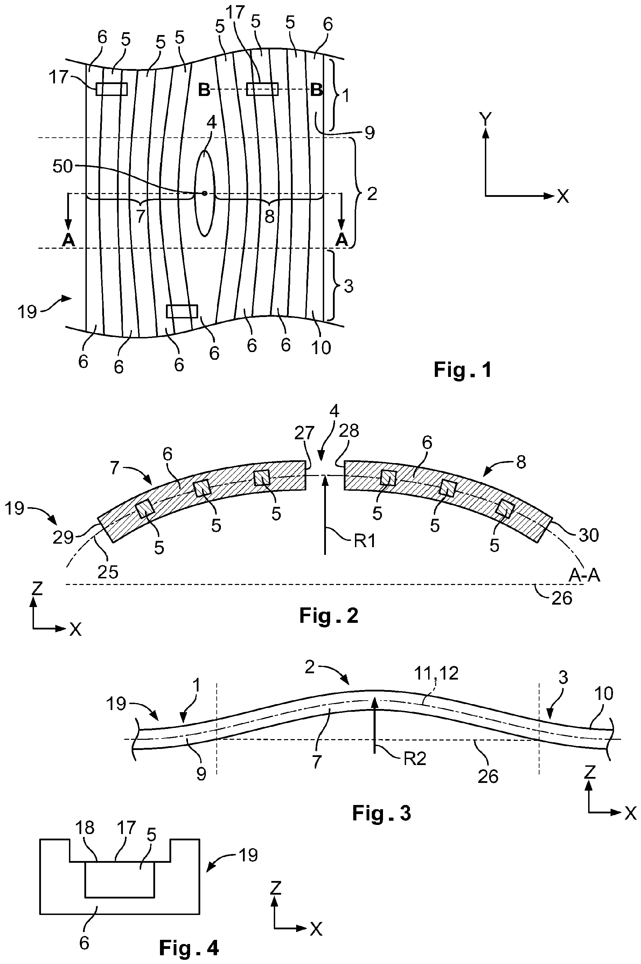

Figure 1 shows, in a schematic depiction, a plan view of a portion of a cable 19, which has a first section 1, a second section 2 and a third section 3 in the longitudinal direction of the cable 19. The depicted cable 19 has six electrical lines 5, which are embedded in an insulating sheath 6 and which are guided from the first section 1 to the third section 3 via the second section 2. The electrical lines 5 are orientated substantially along a longitudinal direction in the y axis. In addition, the electrical lines 5 are orientated substantially side-by-side along a transverse direction along an x axis. In the first and in the third section 1, 3, the insulating sheaths 6 of the lines 5 are configured integrally and form a first insulating section 9 in the first section 1 and a third insulating section 10 in the third section 3. Two further insulating sections 7, 8 are configured in the second section 2, with the further insulating sections 7, 8 being separated from each other by a gap 4. The gap 4 is introduced in the insulating material spaced apart from two neighbouring electrical lines 5. In the depicted embodiment, the first further insulating section 7 has three electrical lines 5. The second further insulating section 8 has three electrical lines 5. The electrical lines 5 of the first and of the second further insulating section 7,8 are guided laterally in the direction of the X axis around a centre point 50 of the cable 19 corresponding to the arcuate form of the edge region of the gap 4 on paths of curvature. The second section 2 can, as a result of the gap 4, have a greater width along the X axis than the first and the third section 1,3.

In the first insulating section 9, two recesses 17 are introduced, which are each guided as far as an electrical line 5. Furthermore, an aperture 17 is also introduced in the third insulating section 10, which aperture 17 is guided as far as an electrical line 5.

Figure 2 shows a cross-section A-A of Figure 1 in the region of the second section 2. The first and the second further insulating section 7, 8 are depicted in cross-section, with the two further insulating sections 7, 8 each having a curvature or path of curvature 25 arranged perpendicular to the longitudinal extent. In the depicted embodiment, the first and the second further insulating section 7, 8 lie on a common path of curvature 25. The path of curvature 25 has a specified first radius R1, for example. The first radius can have values between 1 cm and 5 cm, for example. However, the first radius can also adopt other values. Depending on the selected embodiment, the first and the second further insulating section 7, 8 can also have different curvatures with different radii. A first plane 26 is depicted schematically as a dashed line, in which the first section of the cable 19 is located. The first and the second further insulating section 7, 8 are separated by the gap 4 and are spaced apart from each other laterally. Inner edge regions 27, 28 of the first and of the second further insulating section 7, 8 are arranged at approximately the same level.

Outer edge regions 29, 30 of the first and of the second further insulating section 7, 8 are arranged closer to the first plane 26. Depending on the selected embodiment, the outer edge regions 29, 30 can be arranged at the level of the first plane 26 or adjacent to the level of the first plane 26. Thus, the first and second further insulating sections 7,8 can represent, in the Z-X plane, a partial circle which is smaller than a semicircle, or a semicircle.

The first and the second further insulating section 7, 8 each have a rectangular form in cross-section perpendicular to the Y axis, i.e. in the Z-X plane. In addition, the electrical lines 5 of the first and of the second further insulating section 7, 8 are configured with a rectangular cross-section. The cross-sections of the further insulating sections and/or of the electrical lines can also have other forms.

Depending on the selected embodiment, the gap 4 can be configured by a slot in the insulating material, that is to say without a substantial removal of insulating material. In addition, the slot 4 can be configured by removal, that is to say by introducing a continuous recess in the insulating material. For example, the slot 4 can have a form which tapers in the direction of the first section 1 and in the direction of the third section 3. A slot 4 can, depending on the selected design, have a length of 5 mm to 15 mm, for example.

In a schematic depiction, Figure 3 shows a side view of the cable 19, with the first insulating section 9 and the third insulating section 10 being arranged on the first plane 26 in the example. The first plane 26 is drawn schematically in the form of a dashed line. In Figure 3, the first further insulating section 7 is depicted schematically. In the longitudinal direction, that is to say in the Y direction, the first and the second further insulating section 7, 8 extend on a first or second arcuate path 11, 12. The arcuate paths 11,12 emerge smoothly out of the first plane of the first insulating section 9, and merge smoothly again into the first plane of the second insulating section 10. The first and second paths have no kinks or significant bends. In Figure 3, the arcuate path 11, 12 is depicted schematically as a centred path transversely over the cross-section of the first and of the second further insulating section 7, 8 respectively.

The first and second arcuate paths have a specified second radius R2, for example. The second radius R2 can have values between 1 cm and 5 cm, for example. The second radius R2, however, can also have other values. Depending on the selected embodiment, it is not necessary for the first and second further insulating sections 7, 8 to actually have an arcuate path 11, 12 in the form of a partial circle, but rather the first and the second further insulating section 7, 8 can have any type of path which is curved with respect to the plane of the first and third insulating sections 9, 10. In addition, the first and second arcuate paths can also have the form of at least one semicircle.

Depending on the selected embodiment, the first and second insulating sections 9, 10 can be arranged on different planes offset in relation to each other along the Z axis or also can have a partially arcuate and/or curved path.

Thus, the second section 2 of the cable 19 can have at least the form of a part-spherical surface, in particular the form of a hemispherical surface. Depending on the design, the second section can also have the form of another surface which is arched in the three axes X,Y,Z.

Figure 4 shows, in a schematic depiction, a cross-section B-B through the cable 19 of Figure 1 in the region of the recess 17. The recess 17 extends from an outer side of the insulating material 6 of the cable 19 up to a contact area 18 of the line 5. Thus, the line 5 is exposed in the region of the recess 17 with the contact area 18 and can be used for electrical and/or mechanical connections, e.g. to a sensor or a contact element.

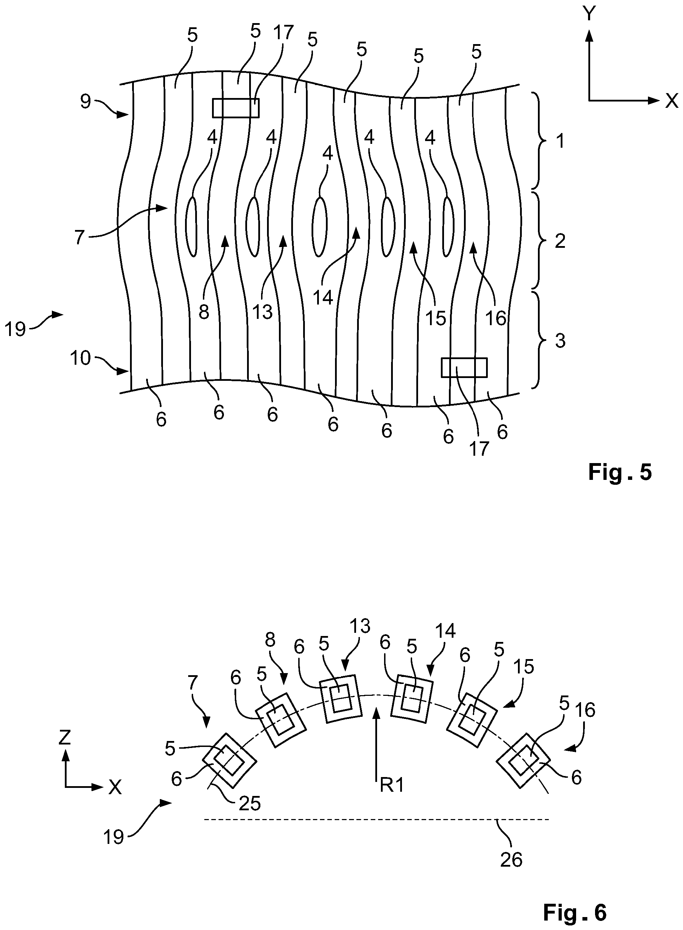

Figure 5 shows, in a schematic depiction, a plan view of a further embodiment of a cable 19, which is configured substantially in accordance with the embodiment of Figure 1, but with several further insulating sections 7, 8, 13, 14, 15, 16 being supplied in the second section 2. In the depicted exemplary embodiment, each electrical line 5 in the second section 2 is separated from the neighbouring electrical line 5 by a gap 4, with the gap 4 being introduced into the insulating layer. The electrical lines 5 are also completely enveloped by an insulating sheath 6 in the region of the second section 2. Thus, in this design too, the second section 2 of the cable 19 can have at least the form of a part-spherical surface, in particular the form of a hemispherical surface. Depending on the design, the second section can also have the form of another surface which is arched in the three axes X,Y,Z.

Figure 6 shows, in a schematic depiction, a cross-section through the second section 2 of the cable 19 of Figure 5. The further insulating sections 7, 8, 13, 14, 15, 16 are arranged on a path of curvature 25. The path of curvature 25 has a set first radius R1, for example. In addition, the first plane 26 of the first and of the third insulating section 9, 10 is depicted as a dashed line. The further insulating sections each have a line 5 and an insulating sheath 6. The described cable has an increased flexibility on account of the second section 2, in which gaps 4 are introduced into the insulating material 6 and several further insulating sections are configured. In the depicted example, the section 2 in cross-section is configured perpendicular to the Y axis as a partial circle with the first radius R1. The partial circle covers less than the semicircle. Depending on the selected design, the section 2 of the cable of Figure 5 can also cover a semicircle also in cross-section perpendicular to the longitudinal axis Y.

As a result of the form of the further insulating sections in the form of arcuate paths transverse to the longitudinal extent (Y axis) and along the longitudinal extent in the second section 2, cable length is kept ready for a relative displacement of the first and of the third section. Furthermore, as a result of the arrangement of the further insulating sections on or along a path of curvature 25, which arrangement is configured perpendicular to the longitudinal extent of the cable in the second section 2, an improved flexibility with respect to a lateral displacement along the x axis and/or twisting of the first and/or of the third section 1, 3, is provided.

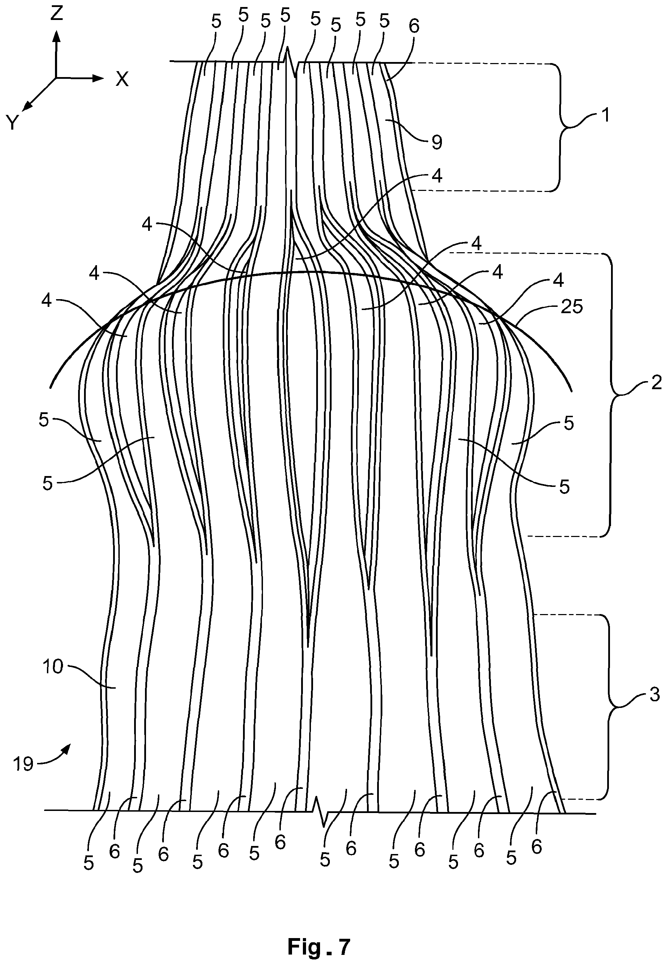

Figure 7 shows, in a schematic perspective depiction, the cable 19 of Figure 5, which has further insulating sections in the second section 2, which further insulating sections are arranged in the form of a hemispherical surface. In the region of the second section 2, the path of curvature 25 of the further insulating sections in the Z-X plane is shown schematically in the form of a solid line. As can be seen from the figure, the two outer edge regions of the second section are arranged on one plane. In the X direction perpendicular to the longitudinal extent of the cable, the second section has a greater width than in the first section 1 or in the third section 3. The width of the first section 1 is the same as the width of the third section 3.

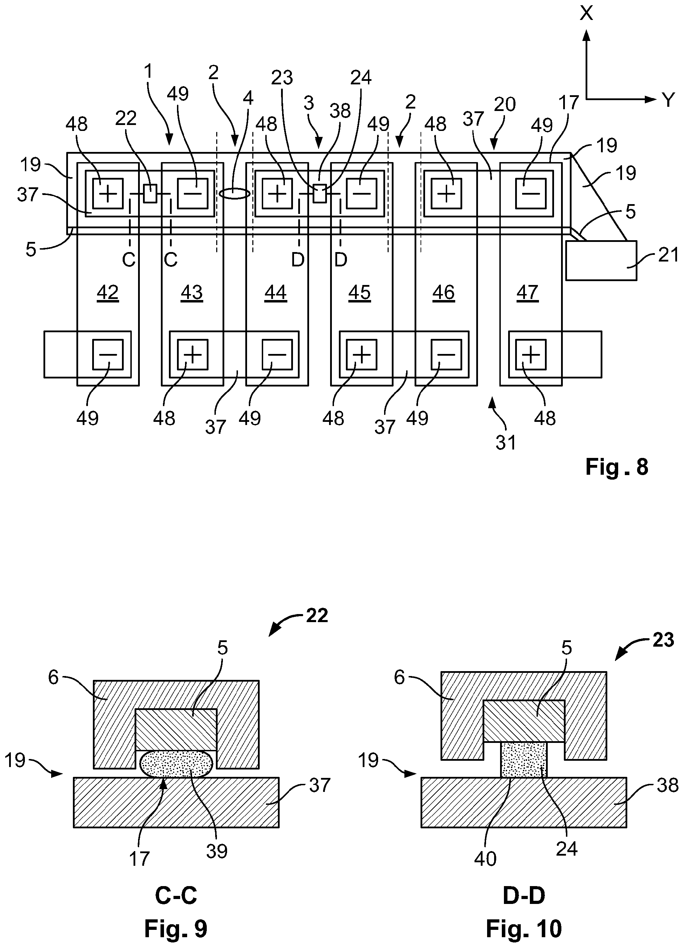

Figure 8 shows, in a schematic depiction, a plan view of a battery 31, which has several battery cells 42, 43, 44, 45, 46, 47. The battery cells 42 to 47 each have a positive pole 48 and a negative pole 49. The positive poles 48 are denoted by a plus symbol. The negative poles 49 are denoted by a minus symbol. Depending on the electrical circuitry, the battery cells 42 to 47 can be connected in series or in parallel. In the depicted embodiment, the battery cells are electrically connected in series. For this purpose, a positive pole 48 of a battery cell is connected to a negative pole 49 of a neighbouring battery cell via an electrically conductive connecting element 37.

To detect electrical voltages of the battery cells or to detect temperatures of the battery cells, a cable 19, which is depicted schematically as a transparent strip, is guided along the row arrangement at a first row of poles over the battery cells of the battery 31. To simplify the depiction, only one electrical line 5 of the cable 19 is drawn schematically, which runs along the row of poles of the first side of the battery 31. All the other electrical lines 5 of the cable 19 run in the same direction. The cable 19 is configured in accordance with one of the described exemplary embodiments.

The cable 19 is connected to the connecting element 37 at a first connection point 22. At the first connection point 22, an electrical line is directly or indirectly connected electrically and/or mechanically to the connecting element 37. The first connection point 22 is configured in the first section 1 of the cable 19. Furthermore, a second connection point 23 is supplied, which is electrically and/or mechanically connected to a further connecting element 38. The connecting elements 37, 38 are depicted schematically as rectangles. The second connection point 23 is configured in the third section 3 of the cable 19. Between the first and the third section 1, 3, the second section 2 of the cable is configured with the at least two further insulating sections. A gap 4 is drawn schematically in the second section 2. Depending on the selected embodiment, more than just one gap 4 is also supplied in the second section 2. In particular, the cable is configured in accordance with Figure 7. Depending on the selected embodiment, the second connection point 23 can also be electrically and/or mechanically connected to the same connecting element 37 as the first connection point. The second connection point 23 is configured in the third section 3 of the cable 19. Between the first and the third section 1, 3, the second section 2 of the cable is configured with the at least two further insulating sections. A gap 4 is drawn schematically in the second section 2. Depending on the selected embodiment, more than just one gap 4 is also supplied in the second section 2. In particular, the cable is configured in accordance with Figure 7.

The cable 19 is guided with the electrical lines to a control unit 21, for example, which is configured at the battery 31. Parameters such as voltage, current or temperature of the battery cells, for example, can be detected via the electrical lines of the cable 19 and forwarded to a further unit such as the control unit 21, for example. The first and the second connection point 22, 23 are produced, for example, by recesses in the first or third recess 1,3 of the cable 19.

Figure 9 shows, in a schematic depiction, a cross-section C-C through the first connection point 22, in which the electrical line 5 is connected to the connecting element 37 via the recess 17 and an electrically conductive connecting material 39 such as solder, for example.

Figure 10 shows a cross-section D-D through the second connection point 23, in which the electrical line 5 is connected to a sensor 24, with the sensor 24 in turn being mechanically connected to the further connecting element 38 or the connecting element 37 via a connecting layer 40. The connecting layer 40 can be produced by a thermally conductive adhesive, for example.

Depending on the selected embodiment, both the first and the second connection point 22, 23 can have an electrically conductive connection between an electrical line 5 and the connecting elements 37, 38. In addition, depending on the selected embodiment, both the first and the second connection point 22, 23 can have only one mechanical connection to the connecting element 37 and the further connecting element 38, for example via a sensor 24.

Instead of the arrangement with battery cells which is depicted in the example of Figure 8, the cable 19 with the first, second and third sections can also be electrically and/or mechanically attached to other contact elements in the region of the first section and in the region of the third section.

The electrical cable 19 with the first, second and third sections can be manufactured from a flat ribbon cable or from an FFC foil conductor, for example, with at least one gap 4 being introduced into the insulating material of the cable in the second section between only two neighbouring electrical lines. Depending on the selected embodiment, several gaps can be introduced into the second section of the cable with or without removal of insulating material.

In addition, the electrical lines and/or the insulating material can be permanently embossed or pressed into the desired form in the second section of the cable with the aid of pressure and/or heat and an appropriate forming surface. For example, a partial sphere or a sphere can be used as the forming surface. As a result, both the form of the paths of the further insulating sections along the longitudinal direction of the cable and the paths of curvature of the further insulating sections can be specified and set transverse to the longitudinal extent of the cable. Thus, the second section 2 of the cable 19 can be formed permanently at least into the form of a part-spherical surface, in particular into the form of a hemispherical surface. Depending on the design, the second section can also have the form of another surface which is arched in the three axes X,Y,Z.

The electrical and mechanical connections between the electrical lines and the contact elements can be manufactured, for example, with the aid of a welded connection, a soldered connection or an electrically insulating or electrically conductive adhesive.

Depending on the selected embodiment, the cable 19 can have six to eight, twelve or also more electrical lines. The electrical lines can be configured as voltage lines or as sensor lines. For example, the electrical lines can be 1 to 2 mm wide and 0.4 to 0.8 mm thick in cross-section. In the embodiment as sensor lines, the electrical lines can have a smaller cross-section and for example can be 0.8 to 1.2 mm wide and 0.2 to 0.4 mm thick. The cable can have a width of e.g. 10 mm to 30 mm in the X axis. The lines 5 are formed from copper, for example. An NTC or PTC resistance sensor, for example, can be supplied as the sensor. The sensor can, for example, be soldered to the contact element, in particular to a contact element of a battery cell, or connected via an adhesive layer.

The gaps 4 can be introduced into the insulating material of the insulating sheaths 6, for example, with the aid of a laser cutting method or a stamping method. The insulating material for the insulating sheaths 6 of the electrical lines can be formed from plastic, for example.

## Claims

1. An electrical cable (19) having a first section (1), having a second section (2) and having a third section (3), wherein several electrical lines (5) are guided from the first section (1) to the third section (3) via the second section (2),
wherein each electrical line (5) in the three sections (1,2,3) is enveloped in each case by an insulating sheath (6), wherein, in the first section (1), the electrical lines (5) are arranged side-by-side in a first plane, wherein, in the third section (3), the electrical lines are arranged side-by-side in a third plane, wherein, in the first section (1), the insulating sheaths (6) of the lines (5) are configured integrally in the form of a first insulating section (9), wherein, in the third section (3), the insulating sheaths (6) of the lines (5) are configured integrally in the form of a third insulating section (10), wherein, in the second section (2), the insulating sheaths (6) of the electrical lines (5) are divided at least into a first further insulating section (7) and into a second further insulating section (8), wherein the first further insulating section (7) and the second further insulating section (8) are separated from each other by a gap (4), wherein the first further insulating section (7) is guided from the first insulating section (9) to the third insulating section (10) in a first arcuate path (11), wherein the second further insulating section (8) is guided from the first insulating section (9) to the third insulating section (10) in a second arcuate path (12).

2. The cable according to Claim 1, wherein the first further insulating section (7) has a first curvature perpendicular to the first arcuate path (11), wherein the second further insulating section has a second curvature perpendicular to the second arcuate path.

3. The cable according to any one of the preceding claims, wherein, in the second section (2), further insulating sections (13,14,15,16) are supplied, wherein the further insulating sections (13,14,15,16) are separated from each other by gaps (4), and wherein the further insulating sections (13,14,15,16) are guided in further arcuate paths from the first insulating section (9) to the third insulating section (10).

4. The cable according to Claim 3, wherein the further insulating sections (13,14,15,16) have a further curvature perpendicular to the further arcuate paths.

5. The cable according to any one of Claims 3 or 4, wherein the further insulating sections (7,8,13,14,15,16) are arranged perpendicular to a longitudinal extent of the further insulating sections (7,8,13,14,15,16) on a path of curvature (25).

6. The cable according to any one of the preceding claims, wherein at least one or each further insulating section (7,8,13,14,15) has only one electrical line (5) with an insulating sheath (6), wherein the insulating sheaths (6) are separated by gaps (4).

7. The cable according to any one of the preceding claims, wherein the second section (2) of the cable (19) is configured in the form of a spherical surface which is arcuate in three axes, in particular at least in the form of a part-spherical surface or in the form of a hemispherical surface, wherein the further insulating sections (7,8,13,14,15,16) are arranged on the spherical surface.

8. The cable according to any one of the preceding claims, wherein the further insulating sections (7,8,13,14,15,16) are formed in an elastically resilient manner in the arcuate paths (11,12) in such a way that, after an expansion or compression of the further insulating sections (7,8,13,14,15,16) out of the arcuate paths (11,12), the insulating sections (7,8,13,14,15,16) are biased in the direction of the corresponding arcuate path (11,12).

9. An arrangement having at least one first contact element (37, 38) and one electrical cable (19) in accordance with any one of the preceding claims, wherein the first insulating section (9) is arranged at the first contact element (22), wherein an electrical line (5) of the first insulating section (9) is connected to the first contact element (37), wherein the third insulating section (10) is arranged at the first contact element (37) or at a second contact element (38), wherein an electrical line 5 of the third insulating section (10) is connected to the first or the second contact element (37,38), and wherein the second section (2) of the cable (19) with the two further insulating sections (7,8) is arranged between the first and the second insulating section (9,10).

10. The arrangement according to Claim 9, wherein the first contact element (37) is connected to a first battery cell (42), in particular to an electrical pole (48) of the first battery cell (42) and/or the second contact element (38) is connected to a second battery cell (43), in particular to an electrical pole (49) of the second battery cell (43).

11. The arrangement according to Claim 10, wherein the first contact element (37) and/or the second contact element (38) are configured as an electrically conductive connecting element, wherein the connecting elements connect a pole (48) of the first battery cell (32) to a pole (49) of the second battery cell (34) in an electrically conductive manner.

12. The arrangement according to any one of Claims 9 to 11, wherein the first and/or the second insulating section (9), (10) has a recess (17), which is adjacent to an electrical line (5), and wherein the electrical lines (5) in the region of the recess (17) are electrically conductively connected to the first or the second contact element (37,38).

13. The arrangement according to any one of Claims 9 to 12, wherein the first and/or the second insulating section (9,10) has a recess (17), which is adjacent to an electrical line (5), and wherein the electrical line (5) in the region of the recess is electrically conductively connected to a sensor (24), and wherein the sensor (24) is attached to the first or to the second contact element (37,38).

14. The arrangement according to any one of Claims 9 to 13, wherein the first and the second battery cell (42,43) form a battery (31), in particular a drive battery of a vehicle.

15. A method for manufacturing an electrical cable (19) having a first section (1), having a second section (2) and having a third section (3), wherein several electrical lines (5) are guided from the first section (1) to the third section (3) via the second section (2), wherein each electrical line (5) in the three sections (1,2,3) is enveloped in each case by an insulating sheath (6), wherein, in the first section 1, the electrical lines (5) are arranged side-by-side, wherein, in the third section (3), the electrical lines (5) are arranged side-by-side,
wherein, in the first section, the insulating sheaths (6) of the lines (5) are configured integrally in the form of a first insulating section (9), wherein, in the third section (3), the insulating sheaths (6) of the lines (5) are configured integrally in the form of a third insulating section (10), wherein, in the second section (2), the insulating sheaths (6) of the electrical lines (5) are configured at least into a first further insulating section (7) and into a second further insulating section (8), wherein the first further insulating section (7) and the second further insulating section (8) are configured separately via a gap (4), wherein the first further insulating section (7) is guided from the first insulating section (9) to the third insulating section (10) in a first arcuate path (11), wherein the second further insulating section (8) is guided from the first insulating section (9) to the third insulating section (10) in a second arcuate path (12).
